# FASCICULE DE BREVET EUROPEEN

(11) **EP 0 509 435 B1**
(45) Date de publication et mention de la délivrance du brevet: **30.08.1995**
(21) Numéro de dépôt: 92106369.9
(22) Date de dépôt: 13.04.1992
(51) Int. Cl.: G01M 3/22, G02B 6/44

(54) **Détection de défaut d'étanchéité d'un tube de protection de câble électrique ou optique**
Überprüfung der Dichtigkeit eines Schutzrohres für Elektro- oder Glasfaserkabel
Leak testing of a protective tube for electric or optical cables

(30) Priorité: 19.04.1991 FR 9104857
(43) Date de publication de la demande: 21.10.1992
(73) Titulaire: ALCATEL CABLE, 92111 Clichy Cédex (FR)
(72) Inventeur: Le Davay, Louis, F-78430 Louveciennes (FR)
(74) Mandataire: Weinmiller, Jürgen

(56) Documents cités:
- EP-A- 0 023 031
- EP-A- 0 050 495
- WO-A-91/01506
- DE-B- 1 152 560

## Description

La présente invention est du domaine des câbles. Elle porte plus particulièrement sur la détection de défauts d'étanchéité des tubes de protection de câbles électriques ou de fibres optiques et sur les câbles électriques et/ou optiques et les installations correspondantes pour cette détection.

Ces tubes de protection sont en général métalliques. Ils sont utilisés pour la protection de fibres optiques dans des câbles optiques, en particulier sous-marins, ou de fils métalliques auxquels peuvent être associées une ou des fibres optiques notamment dans des câbles de phase ou de garde de lignes aériennes de transport d'énergie. Les éléments ainsi protégés sont noyés dans un matériau d'étanchéité remplissant le tube, par exemple, comme décrit dans le document WO 91/01506.

Ces tubes sont extrudés ou sont fabriqués par soudage en long d'une bande déformée en tube, cette bande étant elle-même ondulée ou lisse.

Les tubes de protection de fibres optiques peuvent être des tubes de faible diamètre, de l'ordre de 2,5 mm, et d'épaisseur de l'ordre de 0,1 à 0,3 mm. Ils alors sont dits microtubes. Les fibres optiques sont en général introduites dans le microtube au cours de sa fabrication assurée le plus souvent par soudage longitudinal de ses bords à l'aide d'une torche laser, par exemple. Les fibres sont outre noyées dans un matériau d'étanchéité remplissant le microtube. Le remplissage du microtube est souvent réalisé avec la mise sous microtube des fibres.

Le document US-A 4852790 notamment décrit une installation de confection d'un microtube sur une fibre ou un faisceau de fibres, et de remplissage simultané du microtube avec un matériau d'étanchéité, au fur et à mesure de sa confection.

Selon ce document, un tube d'injection de matériau d'étanchéité débouche dans le microtube encore entrouvert et recevant la ou les fibres, en aval du point de soudure de ses bords. Les fibres sont poussées en place, par un gaz inerte soufflé dans un tube de guidage des fibres.

Il peut arriver que ces tubes ou microtubes de protection ne soient pas parfaitement étanches et présentent lorsqu'ils sont obtenus par soudage de petites porosités au niveau des bords soudés.

Des moyens connus de détection de défauts éventuels sur des fils ou tubes métalliques de grande longueur utilisent des procédés par ultra-sons, ou par courants de Foucault. De tels procédés restent cependant inefficaces en dessous d'une certaine dimension des produits à contrôler et sont donc inapplicables notamment pour une détection de défauts des microtubes de protection de fibres optiques. D'autres techniques de détection de défauts éventuels sur des tubes consistent à injecter un gaz de test, en particulier de l'hélium, dans le tube à contrôler et à détecter des traces d'hélium dans l'atmosphère environnante. Ces dernières techniques ne conviennent pas pour des tubes, de grande longueur et éventuellement de très petite section, lorsque ces tubes sont déjà remplis de matériau d'étanchéité qui empêche la propagation du gaz de test sous pression sur leur longueur.

La présente invention a pour but de permettre une détection de défauts d'étanchéité de tubes de protection de câbles électriques et/ou optiques, dans lesquels les éléments protégés sont déjà noyés dans un matériau d'étanchéité du type gelée remplissant le tube, qui soit efficace quelle que soit la dimension de ces tubes et donc applicable aussi bien pour les tubes ou microtubes de protection de fibres optiques que pour les tubes de section plus importante de protection des câbles électriques ou composites électriques et optiques.

La présente invention porte donc sur un procédé de détection d'étanchéité de tels tubes.

Le procédé selon l'invention est caractérisé en ce qu'il consiste d'une part à charger ledit matériau d'étanchéité d'un gaz détectable dit gaz de test, dans une première opération, pour le remplissage dudit tube par ce matériau d'étanchéité chargé dudit gaz de test et dit traité, et d'autre part à faire défiler ledit tube ainsi rempli dudit matériau d'étanchéité traité devant une tête de détection dudit gaz de test, dans une deuxième opération.

Ce procédé présente en outre notamment l'une ou l'autre des particularités suivantes :
- le matériau d'étanchéité est réchauffé, pour améliorer sa diffusion, avant de faire défiler le tube dans une chambre de détection dans laquelle est placée ladite tête de détection.
- la deuxième opération de détection d'étanchéité est effectuée en continu à la suite de la première opération de remplissage du tube, sur une même chaîne de traitement en ligne, ou est effectuée ultérieurement sur une autre chaîne de traitement indépendante, de préférence dans une chambre de détection.

La présente invention porte aussi sur un câble électrique et/ou optique permettant la mise en oeuvre dudit procédé.

Ce câble selon l'invention est à conducteurs électriques et/ou à fibres optiques, dits éléments protégés, qui sont sous tube de protection rempli d'un matériau d'étanchéité, et est caractérisé en ce qu'il est en outre à gaz de test réparti dans tout ledit matériau d'étanchéité remplissant ledit tube, sur la longueur du câble.

La présente invention porte également sur une installation de mise en oeuvre de ce procédé.

L'installation selon l'invention est à premier poste de mise sous tube d'éléments à protéger et de remplissage du tube de matériau d'étanchéité, auquel sont couplés des moyens d'alimentation et d'injection dudit matériau, et est caractérisée en ce qu'elle comporte d'une part, au niveau dudit premier poste, une bouteille de réserve de gaz de test couplée auxdits moyens d'alimentation et d'injection dudit matériau d'étanchéité alors chargé dudit gaz de test et dit traité et ainsi injecté dans ledit tube, et d'autre part, dans un deuxième poste séparé du premier, ladite tête de détection sensible audit gaz de test montée dans une chambre de détection, dans laquelle défile ledit tube rempli de matériau d'étanchéité traité, et un circuit de commande couplé à ladite tête pour des commandes résultantes lors d'un défaut d'étanchéité détecté sur ledit tube.

Selon une autre caractéristique de cette installation, ladite bouteille de gaz de test est reliée à un réservoir de matériau d'étanchéité appartenant auxdits moyens d'alimentation ou est de préférence reliée à une pompe doseuse et d'injection interposée sur une conduite desdits moyens d'alimentation, équipée d'une canule terminale d'injection insérée dans ledit tube.

Selon une autre caractéristique également de cette installation, ledit deuxième poste comporte des moyens de chauffage montés sur le chemin de défilement dudit tube, en amont de ladite tête de détection.

L'invention est décrite ci-après, à titre d'exemple, en regard des figures du dessin ci-annexé, pour la détection de défauts d'étanchéité sur un microtube de protection de fibres optiques d'un câble sous-marin. Dans ce dessin :
- la figure 1 représente schématiquement une installation de soudure et de détection de défauts d'étanchéité d'un microtube de protection de fibres optiques,
- La figure 2 illustre à échelle agrandie un détail de cette installation.

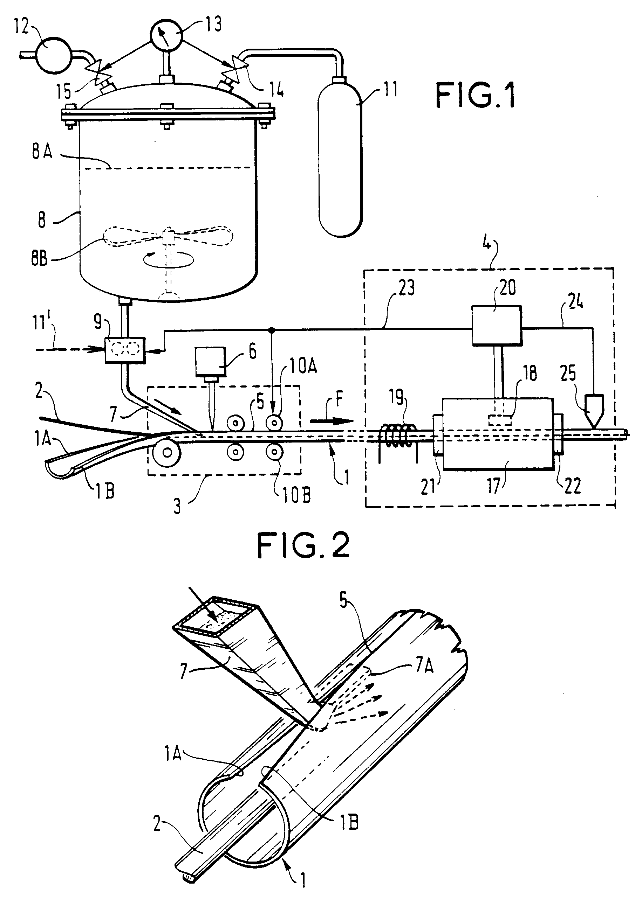

L'installation selon la figure 1 assure la réalisation d'un microtube 1 directement autour d'une ou de plusieurs fibres optiques 2 et simultanément le remplissage du microtube d'un matériau d'étanchéité dans un poste 3. Ce matériau est traité avant ou lors de son injection dans le microtube pour être chargé d'un gaz détectable dit de test. La détection d'éventuels défauts d'étanchéité du microtube est assurée en continu dans un poste 4, au fur et à mesure, de la mise sous microtube des fibres, dans cet exemple illustré.

Le poste 4 de détection de défauts d'étanchéité est en aval du poste 3 et sur la même ligne que lui, il est simplement à distance suffisante du poste 3 pour éviter des éventuelles émanations directes du gaz de test du poste 3.

En variante, le poste 4 peut être sur une autre chaîne indépendante de celle définie par le poste 3, pour une détection de défauts ultérieure, par exemple lors d'une opération de reprise et de déroulage du microtube d'un dévidoir de stockage.

Dans cette installation, le poste 3 est en tant que tel connu. Ainsi qu'illustré, la soudure est réalisée par une torche laser 6 dont le rayonnement est focalisé par des moyens optiques convenables sur la ligne de soudage 5 définie par les bords 1A, 1B du microtube défilant dans le poste. Le poste 3 reçoit le tube dont les bords sont encore légèrement entr'ouverts et sont rendus quasi jointifs juste avant le point d'impact du rayonnement laser. Une canule 7 d'injection de matériau d'étanchéité, insérée dans le microtube avant soudage, est couplée à un réservoir 8 de matériau d'étanchéité, à travers une pompe d'injection 9 interposée entre elle et le réservoir. Cette canule 7 présente un bec terminal de protection 7A, ou a sa partie terminale s'étendant au delà du point de soudure, évitant une possible souillure des bords avant soudure.

Des galets inférieurs et supérieurs, tels que 10A, 10B assurent le guidage et l'entraînement du microtube dans le poste 3, comme illustré par la flèche F.

Ce poste 3 peut bien entendu être d'un autre type connu.

Au-delà du poste 3, d'autres galets, non représentés guident le microtube fermé et assurent son avance, pour son défilement dans le poste 4.

Selon la présente invention, préalablement à son injection dans le microtube, le matériau d'étanchéité peut être dégazé pour le décharger des gaz initiaux et en particulier de l'air industriel qu'il contient, et est chargé d'un gaz détectable dit de test. Ce matériau d'étanchéité est par exemple un gel de pétrole ou tout autre compound analogue d'étanchéité. Le gaz détectable est choisi parmi les gaz utilisés traditionnellement pour la détection de fuites, et parmi eux tout particulièrement l'hélium qui n'apporte aucun affaiblissement optique supplémentaire dans les fibres pour l'exemple considéré, et est très aisément détectable.

A cet effet, le réservoir 8, initialement non totalement rempli de matériau d'étanchéité comme montré par le niveau repéré en 8A et éventuellement équipé de moyens de chauffage non représentés, a sa partie supérieure couplée à une bouteille de réserve d'hélium 11, à une pompe à vide 12 ainsi qu'à un détecteur 13 de la pression régnant à l'intérieur du réservoir. Ce détecteur 13 détecte la pression souhaitée de vide à réaliser et la pression d'hélium souhaitée. Deux vannes 14 et 15, interposées sur les conduites entre la bouteille d'hélium et le réservoir 8 et entre la pompe à vide et le réservoir, sont commandées en ouverture et fermeture par le détecteur 13, en regard de valeurs de consigne prédéfinies pour les valeurs désirées de vide à réaliser et de pression d'hélium. Dans le réservoir 8, éventuellement un système intérieur de malaxage 8B assure le mélange de l'hélium au matériau d'étanchéité.

Le réservoir 8 de matériau d'étanchéité peut être doublé par un autre réservoir se substituant au premier quand celui-ci est vide et dont le matériau d'étanchéité est pareillement chargé du gaz de test avant remplissage du microtube.

En variante, la bouteille de réserve d'hélium 11 est couplée, non pas au réservoir 8 de matériau d'étanchéité, mais à la pompe d'injection 9 comme indiqué par la flèche en pointillé 11'. Le matériau d'étanchéité est alors chargé d'hélium au fur et à mesure de son injection dans le microtube. La pompe 9 permet alors une répartition uniforme d'hélium dans le matériau d'étanchéité et son injection en quantité adéquate et constante avec lui dans le microtube.

Le poste 4 de détection de défauts d'étanchéité comporte quant à lui une chambre de détection 17, contenant une tête 18 de détection d'hélium, et des moyens de chauffage 19 du microtube et du matériau d'étanchéité qu'il contient, avant l'entrée du microtube dans la chambre 17. Un circuit de commande 20 extérieur à la chambre est couplée à la tête de détection, pour des commandes convenables en cas de détection d'hélium.

La tête de détection 18 est montée proche du microtube, en regard de la ligne de soudure réalisée. Deux joints 21 et 22, à l'entrée et à la sortie du microtube de la chambre 17, assurent l'étanchéité de la chambre relativement aux autres parties de l'équipement et de l'atmosphère extérieure environnante, pour une grande sensibilité de détection de présence d'hélium dans la chambre.

Les moyens de chauffage 19 en amont de la chambre permettent une diffusion accrue d'hélium à travers d'éventuelles porosités du microtube.

Des éventuelles traces d'hélium détectées dans la chambre traduisent obligatoirement un manque d'étanchéité du microtube. Elles donnent lieu aux commandes convenables déclenchées par le circuit 20. Ce sont, par exemple, des commandes d'arrêt de l'installation et/ou de réglage en position du microtube relativement à la torche laser, ainsi qu'illustré par une première liaison de commande 23 entre le circuit 20, les galets moteurs tels que 10A et éventuellement la pompe d'injection 9. Ce sont également par exemple, avec ou sans arrêt de l'installation, des commandes de reprise immédiate de soudage, ou de simple repérage de la partie défectueuse à reprendre ou supprimer ultérieurement, ainsi qu'illustré par une deuxième liaison de commande 24 entre le circuit 20 et un organe de reprise ou de repérage 25, en aval de la chambre 17.

A chaque détection de traces d'hélium dans la chambre de détection, celle-ci est ventilée pour l'élimination de ces traces et le détecteur réactivé. Si la ligne est maintenue en fonctionnement continu, la longueur de microtube défilant dans la chambre pendant sa ventilation est également estimée défectueuse, et sera vérifiée ultérieurement.

L'exemple de réalisation illustré et décrit ci-avant a été donné en regard d'un microtube de protection de fibres optiques, soudé par torche laser. Bien entendu, le mode de soudage ou le mode de fabrication du tube ou du microtube en tant que tel hors de l'invention peut être différent, comme indiqué ci-avant.

La détection de défaut, montrée effectuée sur la ligne de mise sous-microtube des fibres, peut aussi bien être effectuée au cours d'une autre opération indépendante de traitement et défilement en continu du microtube ou être répétée plusieurs fois dans le temps au cours de plusieurs de ces opérations, sans pour autant sortir du cadre de cette invention. Il en est de même en ce qui concerne les dimensions du tube de protection et le ou les éléments de câble qu'il protège, pouvant être un ou des conducteurs métalliques toronnés ou non, en particulier en cuivre ou en aluminium, auxquels peuvent être associées une ou plusieurs fibres optiques, pour des câbles de phase ou de garde de lignes aériennes, ainsi que le gaz de test utilisé qui peut être un gaz détectable autre que l'hélium mais restant compatible avec les éléments protégés, ce mode de détection de défauts d'étanchéité des tubes de protection étant applicable aux câbles terrestres et sous-marins, optiques ou non.

## Revendications

1. Procédé de détection de défauts d'étanchéité d'un tube métallique (1) de protection de câble électrique et/ou optique, à conducteurs électriques et/ou à fibres optiques (2), dits éléments protégés, noyés dans un matériau d'étanchéité remplissant ledit tube, caractérisé en ce qu'il consiste d'une part à charger ledit matériau d'étanchéité d'un gaz détectable dit gaz de test, dans une première opération, pour le remplissage dudit tube par ce matériau d'étanchéité chargé dudit gaz de test et dit traité, et d'autre part à faire défiler ledit tube ainsi rempli dudit matériau d'étanchéité traité devant une tête de détection (18) dudit gaz de test, dans une deuxième opération.

2. Procédé selon la revendication 1 caractérisé en ce qu'il consiste en outre à dégazer ledit matériau d'étanchéité avant de le charger de gaz de test dans la première opération.

3. Procédé selon la revendication 2, caractérisé en ce qu'il consiste en outre à chauffer ledit matériau d'étanchéité pour le dégazer dans la première opération.

4. Procédé selon l'une des revendications 1 à 3, caractérisé en ce qu'il consiste en outre à chauffer ledit tube et le matériau d'étanchéité qu'il contient dans la deuxième opération, avant de le faire défiler ledit tube devant ladite tête de détection (18), pour améliorer la diffusion dudit gaz de test, ladite tête de détection (18) étant de préférence placée dans une chambre de détection (17).

5. Procédé selon l'une des revendications 1 à 4, caractérisé en ce qu'il consiste à effectuer ladite deuxième opération en continu, au fur et à mesure et directement à la suite du remplissage dudit tube avec sa confection sur lesdits éléments protégés (2), sur une même ligne de traitement.

6. Procédé selon l'une des revendications 1 à 4, caractérisé en ce qu'il consiste à effectuer ladite deuxième opération indépendamment de la première, sur une ligne de traitement autre que celle de traitement pour ladite première opération.

7. Câble, à conducteurs électriques et/ou optiques, dits éléments protégés (2), disposés sous tube de protection (1) rempli de matériau d'étanchéité, pour la mise en oeuvre du procédé selon l'une des revendications 1 à 6, caractérisé en ce qu'il comporte ledit gaz de test (11), sensiblement réparti uniformément dans tout ledit matériau d'étanchéité à l'intérieur dudit tube (1), sur toute la longueur du câble.

8. Câble selon la revendication 7, caractérisé en ce que ledit gaz de test (11) est un gaz détectable et compatible avec lesdits éléments protégés (2), et est en particulier l'hélium.

9. Installation de mise en oeuvre du procédé selon l'une des revendications 1 à 6, comportant un premier poste (3) de mise desdits éléments (2) sous tube (1) et de remplissage dudit tube (1) de matériau d'étanchéité, auquel sont couplés des moyens d'alimentation (8,9) et d'injection (7) de matériau dans ledit tube (1), caractérisée en ce qu'elle comporte d'une part, au niveau dudit premier poste (3), une bouteille de réserve de gaz de test (11, 11') couplée auxdits moyens d'alimentation et d'injection (8, 9) dudit matériau d'étanchéité alors dit traité et ainsi injecté dans ledit tube (1), et d'autre part, dans un deuxième poste (4) séparé du premier, ladite tête de détection (18) sensible audit gaz de test montée dans une chambre de détection (17), dans laquelle défile ledit tube rempli dudit matériau traité, et un circuit de commande (20) couplé à ladite tête (18) pour des commandes résultantes (23, 24) lors d'un défaut d'étanchéité détecté sur ledit tube.

10. Installation selon la revendication 9, caractérisée en ce que ledit deuxième poste (4) comporte, en outre, des moyens de chauffage (19) dudit tube (1), montés en amont de ladite tête (18).

11. Installation selon l'une des revendications 9 et 10 caractérisée en ce que le deuxième poste comporte, en outre, un organe de reprise ou de repérage (25) d'une partie de tube détectée défectueuse, couplé audit circuit de commande (20) et monté en aval de ladite chambre (17).

12. Installation selon l'une des revendications 9 à 11 dans laquelle les moyens d'alimentation (8,9) et d'injection (7) du matériau comportent un réservoir (8) couplé par une pompe d'injection à une canule d'injection (7) insérée dans le tube (1), caractérisée en ce que ladite bouteille de gaz de test (11) est couplée à la partie supérieure du dit réservoir (8) équipé de moyens de contrôle (12, 13) de quantité de gaz de test introduit dans ledit réservoir (8) et mélangé au dit matériau.

13. Installation selon la revendication 12, caractérisée en ce que lesdits moyens de contrôle (12, 13) comportent une pompe à vide (12) et des moyens de détection de pression de vide et/ou de gaz de test (13) dans ledit réservoir (8), reliés à la partie supérieure du réservoir (8).

14. Installation selon l'une des revendications 12 et 13, caractérisée en ce qu'elle comporte, en outre, des moyens de mélange (8B) dudit gaz de test audit matériau, montés dans ledit réservoir (8).

15. Installation selon l'une des revendications 12 à 14, caractérisée en ce que des moyens de chauffage sont associés au réservoir (8), pour le dégazage dudit matériau d'étanchéité de gaz initiaux qu'il contient.

16. Installation selon l'une des revendications 9 à 11, dans laquelle lesdits moyens d'alimentation (8,9) et d'injection (7) comportent une conduite d'alimentation à canule terminale d'injection (7) insérée dans ledit tube (1), caractérisée en ce que ladite bouteille de gaz de test (11') est couplée directement à une pompe (9) interposée sur ladite conduite, sensiblement entre elle et ladite canule terminale d'injection, pour charger ledit matériau dudit gaz de test en continu au fur et à mesure de son injection dans ledit tube (1), ladite pompe (9) étant de préférence doseuse et mélangeuse.

17. Installation selon l'une des revendications 9 à 16, caractérisée en ce que ledit deuxième poste (4) et ledit premier poste (3) appartiennent à une même chaîne de traitement en ligne, le long de laquelle ledit deuxième poste est en aval du premier poste et reçoit en continu ledit tube dudit premier poste.

18. Installation selon l'une des revendications 9 à 16, caractérisée en ce que ledit deuxième poste (4) appartient à une chaîne de traitement en ligne indépendante de celle de traitement définie par ledit premier poste (3).

## Claims

1. A method of detecting sealing faults in a metal protective tube (1) for protecting an electrical and/or optical cable having electrical conductors and/or optical fibers (2), referred to as "protected components", embedded in a sealing material filling said tube, said method being characterized in that it consists firstly in priming said sealing material with a detectable "test" gas in a first step, so as to fill said tube with the resulting "processed" sealing material primed with said test gas, and secondly in causing said tube filled with said processed sealing material to advance past a detection head (18) for detecting said test gas in a second step.

2. A method according to claim 1, characterized in that it further consists in degassing said sealing material before priming it with test gas in the first step.

3. A method according to claim 2, characterized in that it further consists in heating said sealing material so as to degas it in the first step.

4. A method according to any one of claims 1 to 3, characterized in that it further consists in heating said tube and the sealing material contained therein in the second step, before causing said tube to advance past said detection head (18), so as to improve diffusion of said test gas, said detection head (18) preferably being placed inside a detection chamber (17).

5. A method according to any one of claims 1 to 4, characterized in that it consists in performing said second step continuously, directly after said tube has been filled with the processed sealing material over said protected components (2), and on the same processing line.

6. A method according to any one of claims 1 to 4, characterized in that it consists in performing said second step independently from the first step, on a different processing line from the processing line used for said first step.

7. A cable having electrical and/or optical conductors, referred to as "protected components" (2), disposed inside a protective tube (1) filled with sealing material, on which cable the method according to any one of claims 1 to 6 can be implemented, said cable being characterized in that it includes said test gas (11), substantially uniformly distributed throughout said sealing material, inside said tube (1), along the entire length of the cable.

8. A cable according to claim 7, characterized in that said test gas (11) is a detectable gas, is compatible with said protected components (2), and is in particular helium.

9. An installation for implementing the method according to any one of claims 1 to 6, said installation including a first station (3) for enclosing said components (2) inside a tube (1), and for filling said tube (1) with sealing material, which station is coupled to feed means (8, 9) and injection means (7) for supplying said sealing material and injecting it into said tube (1), said installation being characterized in that, at said first station (3), it includes a test gas storage cylinder (11, 11') coupled to said feed and injection means (8, 9) for supplying said processed material and injecting it into said tube (1), and in that, in a second station (4) separate from the first station, the installation includes said detection head (18) which is responsive to said test gas and which is mounted in a detection chamber (17) through which said tube filled with said processed material advances, and a control circuit (20) coupled to said head (18) so as to give corresponding instructions (23, 24) when a sealing fault is detected in said tube.

10. An installation according to claim 9, characterized in that said second station (4) further includes heating means (19) for heating said tube (1), which heating means are mounted upstream of said head (18).

11. An installation according to claim 9 or 10, characterized in that the second station further includes a re-welding or identification member (25) for re-welding or identifying a portion of tube that is detected as being faulty, which member is coupled to said control circuit (20) and is mounted downstream of said chamber (17).

12. An installation according to any one of claims 9 to 11, in which the sealing material feed means (8, 9) and injection means (7) comprise a tank (8) coupled via an injection pump to a hollow injection needle (7) inserted into the tube (1), said installation being characterized in that said test gas cylinder (11) is coupled to the top of said tank (8) equipped with quantity control means (12, 13) for controlling the quantity of test gas inserted into said tank (8) and mixed with said material.

13. An installation according to claim 12, characterized in that said control means (12, 13) comprise a vacuum pump (12) and pressure detection means (13) for detecting the pressure of the vacuum and/or the test gas pressure inside said tank (8), the vacuum pump and the pressure detection means being connected to the top of the tank (8).

14. An installation according to claim 12 or 13, characterized in that it further includes mixing means (8B) for mixing said test gas with said material, which mixing means are mounted inside said tank (8).

15. An installation according to any one of claims 12 to 14, characterized in that heating means are associated with said tank (8), for degassing said sealing material of the initial gas contained therein.

16. An installation according to any one of claims 9 to 11, in which said feed means (8, 9) and injection means (7) include a feed pipe, the end of which has a hollow injection needle (7) inserted into said tube (1), said installation being characterized in that said test gas cylinder (11') is coupled directly to a pump (9) interposed on said pipe, substantially between the cylinder and said hollow injection needle, so as to prime said material with said test gas continuously as the material is injected into said tube (11), said pump (9) preferably being a metering and blending pump.

17. An installation according to any one of claims 9 to 16, characterized in that said second station (4) and said first station (3) belong to the same processing line along which said second station is downstream of said first station and receives said tube continuously from said first station.

18. An installation according to any one of claims 9 to 16, characterized in that said second station (4) belongs to a processing line independent from the processing line defined by said first station (3).

## Patentansprüche

1. Verfahren zum Aufspüren von Undichtigkeiten eines metallischen Rohrs (1), das ein elektrisches und/oder optisches Kabel mit elektrischen Leitern und/oder Lichtleitfasern (2) umgibt, geschützte Elemente genannt, die in ein Dichtmaterial eingetaucht sind, das das Rohr füllt, dadurch gekennzeichnet, daß es darin besteht, in einem ersten Arbeitsgang das Dichtmaterial mit einem erfaßbaren Gas, Spürgas genannt, zu beaufschlagen und das Rohr mit diesem mit dem Spürgas beaufschlagten Dichtmaterial zu füllen, und dann in einem zweiten Arbeitsgang das mit dem mit Spürgas beaufschlagten Dichtmaterial gefüllte Rohr vor einem Kopf (18) zum Aufspüren des Spürgases vorbeilaufen zu lassen.

2. Verfahren nach Anspruch 1, dadurch gekennzeichnet, daß es weiter darin besteht, das Dichtmaterial zu entgasen, bevor es im ersten Arbeitsgang mit Spürgas geladen wird.

3. Verfahren nach Anspruch 1, dadurch gekennzeichnet, daß es weiter darin besteht, das Dichtmaterial zu erwärmen, um es im ersten Arbeitsgang zu entgasen.

4. Verfahren nach einem der Ansprüche 1 bis 3, dadurch gekennzeichnet, daß es weiter darin besteht, das Rohr und das darin enthaltene Dichtmaterial im zweiten Arbeitsgang zu erwärmen, bevor das Rohr vor dem Spürkopf (18) vorbeiläuft, um die Diffusion des Spürgases zu verbessern, wobei der Spürkopf (18) vorzugsweise in einer Meßkammer angeordnet ist.

5. Verfahren nach einem der Ansprüche 1 bis 4, dadurch gekennzeichnet, daß es weiter darin besteht, den zweiten Arbeitsgang kontinuierlich direkt nach dem Füllen des Rohrs und seiner Herstellung auf den geschützten Elementen (2) in einem Fertigungsschritt durchzuführen.

6. Verfahren nach einem der Ansprüche 1 bis 4, dadurch gekennzeichnet, daß der zweite Arbeitsgang unabhängig vom ersten in einem anderen Fertigungsschritt als dem für den ersten Arbeitsgang durchgeführt wird.

7. Kabel mit elektrischen und/oder optischen Leitern, geschützte Elemente (2) genannt, die in einem Schutzrohr (1) angeordnet sind, das mit Dichtmaterial gefüllt ist, zur Anwendung des Verfahrens nach einem der Ansprüche 1 bis 6, dadurch gekennzeichnet, daß es das Spürgas (11) im wesentlichen im ganzen Dichtmaterial im Inneren des Rohrs (1) über die ganze Länge des Kabels gleichmäßig verteilt aufweist.

8. Kabel nach Anspruch 7, dadurch gekennzeichnet, daß das Spürgas (11) ein erfaßbares und mit den geschützten Elementen (2) kompatibles Gas ist, und insbesondere Helium.

9. Anlage zur Anwendung des Verfahrens nach einem der Ansprüche 1 bis 6, das eine erste Station (3) zum Einbringen der Elemente (2) in ein Rohr (1) und zum Füllen des Rohrs (1) mit einem Dichtmaterial aufweist, an die Speisemittel (8, 9) und Mittel (7) zum Injizieren von Material in das Rohr (1) gekoppelt sind, dadurch gekennzeichnet, daß sie einerseits in der ersten Station (3) eine Vorratsflasche für Spürgas (11, 11') aufweist, die mit den Speise- und Injektionsmitteln (8, 9) für mit Spürgas beaufschlagtes Dichtmaterial gekoppelt ist, das so in das Rohr (1) injiziert wird, und andererseits in einer zweiten, von der ersten getrennten Station (4) den Spürkopf (18), der für das Spürgas empfindlich ist und in einer Meßkammer (17) angeordnet ist, durch die das mit dem das Gas enthaltenden Material gefüllte Rohr verläuft, und eine Steuerschaltung (20) aufweist, die mit dem Kopf (18) gekoppelt ist, um Befehle (23, 24) zu empfangen, wenn eine Undichtigkeit auf diesem Rohr erfaßt wurde.

10. Anlage nach Anspruch 9, dadurch gekennzeichnet, daß die zweite Station (4) außerdem Heizmittel (19) für das Rohr (1) aufweisen, die vor dem Kopf (18) angeordnet sind.

11. Anlage nach einem der Ansprüche 9 und 10, dadurch gekennzeichnet, daß die zweite Station außerdem ein Ausbesserungs- oder Markierorgan (25) für einen als defekt erkannten Bereich des Rohrs aufweist, das an die Steuerschaltung (20) gekoppelt und hinter der Kammer (17) angeordnet ist.

12. Anlage nach einem der Ansprüche 9 bis 11, bei der die Speisemittel (8, 9) und Mittel (7) zur Injektion des Materials einen Behälter (8) aufweisen, der über eine Injektionspumpe mit einer Injektionskanüle (7) gekoppelt ist, die in das Rohr (1) eingefügt ist, dadurch gekennzeichnet, daß die Flasche mit Spürgas (11) an den oberen Teil des Behälters (8) gekoppelt ist, der Kontrollmittel (12, 13) für die Menge des in den Behälter (8) eingefüllten und mit dem Material vermischten Gases aufweist.

13. Anlage nach Anspruch 12, dadurch gekennzeichnet, daß die Kontrollmittel (12, 13) eine Vakuumpumpe (12) und Mittel zur Erfassung des Vakuumdrucks und/oder des Drucks des Spürgases (13) im Behälter (8) aufweisen, die mit dem oberen Teil des Behälters (8) verbunden sind.

14. Anlage nach einem der Ansprüche 12 und 13, dadurch gekennzeichnet, daß sie außerdem Mittel zur Vermischung (8B) des Spürgases mit dem Material aufweist, die im Behälter (8) angeordnet sind.

15. Anlage nach einem der Ansprüche 12 bis 14, dadurch gekennzeichnet, daß Heizmittel dem Behälter (8) zugeordnet sind, um das Dichtmaterial von den ursprünglich vorhandenen Gasen zu befreien.

16. Anlage nach einem der Ansprüche 9 bis 11, bei der die Speisemittel (8, 9) und die Mittel zur Injektion (7) eine Speiseleitung mit Injektionskanüle (7) am Ende aufweisen, die in das Rohr (1) eingefügt ist, dadurch gekennzeichnet, daß die Flasche mit Spürgas (11') direkt an eine Pumpe (9) gekoppelt ist, die in dieser Leitung eingefügt ist, im wesentlichen zwischen der Flasche und der Injektionskanüle am Ende, um das Material mit dem Spürgas während seiner Injektion in das Rohr (1) zu beaufschlagen wobei die Pumpe (9) vorzugsweise eine Dosier- und Mischpumpe ist.

17. Anlage nach einem der Ansprüche 9 bis 16, dadurch gekennzeichnet, daß die zweite Station (4) und die erste Station (3) einer gemeinsamen Behandlungskette zugehören, in deren Verlauf die zweite Station hinter der ersten Station liegt und kontinuierlich das Rohr von der ersten Station zugeführt erhält.

18. Anlage nach einem der Ansprüche 9 bis 16, dadurch gekennzeichnet, daß die zweite Station (4) einer von der Behandlungskette der ersten Station (3) unabhängigen Behandlungskette angehört.
